# EUROPEAN PATENT APPLICATION

(11) **EP 4 759 563 A2**
(43) Date of publication of application: **17.06.2026**
(21) Application number: 26161933.2
(22) Date of filing: 08.09.2021
(51) Int. Cl.: B60C 11/03

(54) **HIGH PERFORMANCE TYRE**

(30) Priority: 16.09.2020 IT 202000021835
(62) Divisional of application: 24203196.1
(71) Applicant: Pirelli Tyre S.p.A., 20126 Milano (IT)
(72) Inventor: BOLZONI, Roberto, 20126 Milano (IT); SPEZIARI, Diego Ettore, 20126 Milano (IT); SCOTTI, Andrea, 20126 Milano (IT); BIZZI, Stefano, 20126 Milano (IT)
(74) Representative: Fabiano, Piero

(57) **Abstract**

A car tyre (1), in particular a high or ultra high performance car tyre also suitable for use on track, is described. The tread band (8) of the tyre has a central region (L1) having a limited extension, separated from two large shoulder regions, respectively an outer shoulder region (L2) and inner shoulder region (L3). At least the outer shoulder region (L2) and the central region (L1) have a set, limited in type, number, size and extension, of transverse grooves. In the tread band (8) there are also annular portions (S1, S2, M) substantially lacking grooves.

## Description

### Field of the invention

The present invention relates to a car tyre, in particular a high or ultra high performance car tyre intended for use both on road and on track.

### Prior art

The following documents disclose some examples of high or ultra high performance car tyres: WO2009004408, WO2015008137, WO02078982, WO2019111089.

### Summary of the invention

High and ultra high performance car wheel tyres, also intended for use on track, are requested to provide performance, steering precision and excellent grip to the ground, so that high torque can be effectively transferred to the ground, even at the high operating temperatures associated with use on track.

Better results in terms of performance and grip could be obtained with "slick" tyres, such as those used in racing, and/or with tyres characterized by a very low, substantially zero, void-to-rubber ratio.

However, such tyres, although excellent in terms of performance on track, could not be normally used on road, due to the reduced safety parameters in wet conditions. In certain climatic conditions, the presence of precipitation, by making the road surface wet, would significantly reduce tyre grip and would not ensure road holding, adequate traction, effective braking.

The Applicant has observed that generally in order to affect water drainage in the contact zone of the tyre (footprint area) when driving on a wet road surface, an attempt is made to increase the number and/or size of the grooves both in circumferential and in transverse direction.

The presence of wide and deep grooves increases the void-to-rubber ratio of the tread band, positively affecting the draining and grip features of the tyres when driving on wet grounds.

However, the presence of wide and deep grooves in circumferential and/or transverse direction reduces the rigidity of the tread band, leading to a risk of performance decay at high speed on dry grounds, and generates noise.

In view of the above, it is apparent that high or ultra high performance car tyres intended for use both on road and on track, i.e. tyres suitable for transferring a high torque to the ground and/or achieving high speeds, must meet several mutually conflicting requirements in order to provide good performance in each different road and weather condition.

The Applicant has thus faced the problem of providing car tyres, in particular high or ultra high performance car tyres intended for use both on road and on track, capable of ensuring high performance levels, braking, and traction, without at the same time reducing draining and safety features on wet grounds.

The Applicant has focused its efforts to achieve this improvement by producing a tyre having a tread band made with a central region of limited extension separated from two wide shoulder regions. The shoulder regions and the central region have a series of transverse grooves. The tread band is also provided with annular portions substantially lacking grooves: the Applicant has found that such annular portions allow a substantial uniformity in the stiffness of the tyre, both in the circumferential direction and in the lateral direction, to be obtained, to the benefit of traction/braking performance and road holding when cornering.

In a first aspect thereof, the invention relates to a car tyre having:
a tread band comprising a central region extending across an equatorial plane of the tyre, an outer shoulder region located towards an outer side of the tyre and an inner shoulder region located towards an inner side of the tyre;
a first circumferential groove axially delimiting the outer shoulder region relative to the central region of the tread band and a second circumferential groove axially delimiting the inner shoulder region relative to the central region;
said central region having a width smaller than or equal to 35% of an effective width of the tread band;
said outer shoulder region and said inner shoulder region having a width greater than or equal to 30% of an effective width of said tread band;
the outer shoulder region having a width greater than the width of the inner shoulder region;
the outer shoulder region and the inner shoulder region comprising a plurality of first transverse grooves having a first end located substantially at the respective edge of the tread band, a maximum width greater than or equal to 4 mm and an extension equal to at least 50% of the width of the shoulder region in which they are located;
the central region comprising a first and a second circumferential rib separated from each other by a third circumferential groove, the first and the second circumferential rib comprising a plurality of second transverse grooves;
wherein:
   the outer shoulder region comprises a shoulder annular portion having a void-to-rubber ratio substantially equal to zero, located adjacent to the first circumferential groove;
   the first circumferential rib comprises a first annular portion having a void-to-rubber ratio substantially equal to zero, located adjacent to the first circumferential groove;
   the second circumferential rib comprises a second annular portion having a void-to-rubber ratio substantially equal to zero.

The Applicant has found that, thanks to these features, the tyre of the invention can achieve high performance levels, even on track, while still being able to maintain excellent handling and aquaplaning features on wet roads. Without wishing to be bound by any specific theory, the Applicant believes that the presence, in the ribs of the central region and at least in the outer shoulder region, of transverse grooves as described above, together with the presence, in adjacent areas, of annular portions lacking recesses and/or grooves, optimizes the stiffness distribution of the tread band, both in circumferential and in lateral direction, so as to achieve high performance levels in terms of handling, traction and braking, without at the same time reducing the draining features and safety on wet grounds, and to limit noise.

For the purposes of the present invention, the following definitions apply:
By "tread pattern" it is meant the representation of all points of the tread band (including recesses) in a plane perpendicular to the equatorial plane of the tyre and tangential to the maximum diameter of the tyre.

The measurements of angles and/or linear quantities (distances, widths, lengths, etc.) and/or surface areas are to be intended as referring to the tread pattern as defined above.

Furthermore, considering the angular arrangement of the grooves formed in the tread band relative to the equatorial plane of the tyre, such angular arrangement shall be understood, for each point of the groove, as referring to the acute angle (i.e. comprised between 0° and 90° in absolute value) defined by a rotation starting from the equatorial plane to the direction tangent to the groove passing through that point.

By the term "equatorial plane" of the tyre it is meant a plane perpendicular to the rotation axis of the tyre and dividing the tyre into two substantially equal portions.

By "circumferential" direction it is meant a direction generally directed according to the rotation direction of the tyre, or slightly inclined (e.g. by about 20° at most) relative to the rotation direction of the tyre.

By "axial" direction it is meant a direction substantially parallel to the rotation axis of the tyre, or slightly inclined (e.g. by about 20° at most) relative to the rotation axis of the tyre. Generally, the axial direction is substantially perpendicular to the circumferential direction.

By the term "effective width" referred to the tread band it is meant the width of the radially outermost portion of the tread band (from one edge to the other) intended to contact the ground.

By "void-to-rubber ratio" it is meant the ratio between the total surface area of the grooves in a given annular portion of the tread band (possibly of the whole tread band) and the total surface area of the given annular portion of the tread band (possibly of the whole tread band).

By "void-to-rubber ratio substantially equal to zero" it is meant a value of the void-to-rubber ratio of a tread band portion substantially lacking recesses having a significant effect on water drainage and/or on the stiffness of the tread band portion, e.g. a value of the void-to-rubber ratio smaller than or equal to 0.005.

The present invention, in one or more preferred aspects thereof, may comprise one or more of the features hereinafter presented.

Preferably, the second annular portion, located on the second circumferential rib, is arranged adjacent to the third circumferential groove.

Preferably, the second transverse grooves of the first and second transverse ribs may have an extension equal to at least 30% of a width of the circumferential rib in which they are located.

Advantageously, the second transverse grooves of the first circumferential rib are counter-inclined relative to the second transverse grooves of the second circumferential rib.

Conveniently, the second transverse grooves of the first and second circumferential ribs may be inclined relative to a direction parallel to the equatorial plane so as to form an angle greater than 60°.

Preferably, said first circumferential rib has a void-to-rubber ratio smaller than or equal to 0.01.

Advantageously, the void-to-rubber ratio of said first circumferential rib may be determined only by said second transverse grooves.

Conveniently, said first annular portion, located on said first circumferential rib, has a width greater than or equal to 30% of a width of the first circumferential rib.

Preferably, the second transverse grooves of the second circumferential rib may have an extension greater than the extension of the second transverse grooves of the first circumferential rib.

Advantageously, said second annular portion, located on said second circumferential rib, has a width greater than or equal to 25% of a width of the second circumferential rib.

Preferably, said first annular portion may have a width greater than the width of said second annular portion.

Conveniently, said first annular portion has a width greater than the width of the shoulder annular portion.

Preferably, said second circumferential rib has a void-to-rubber ratio smaller than 0.02. Conveniently, said void-to-rubber ratio of the second circumferential rib may be determined only by said second transverse grooves.

Advantageously, the second transverse grooves of the first and second circumferential ribs may have a maximum width smaller than 2 mm.

Preferably, said second transverse grooves of the first and second circumferential ribs may have a maximum depth smaller than 4 mm.

Conveniently, the number of said first transverse grooves of the outer shoulder region may be lower than the number of the first transverse grooves of the inner shoulder region.

Advantageously, the number of the first transverse grooves of the inner shoulder region may be about twice the number of first transverse grooves of the outer shoulder region. In order to improve the lateral discharge of water, said first transverse grooves of said first and second shoulder regions may have an increasing width moving away from the equatorial plane of the tyre.

Conveniently, said first transverse grooves of the outer shoulder region may have a maximum width greater than the maximum width of the first grooves of the inner shoulder region.

Advantageously, said first transverse grooves of said first and second shoulder regions may have a maximum depth smaller than 4 mm.

Preferably, said first transverse grooves of the inner and outer shoulder regions do not have intersection points with the first and the second circumferential groove.

Conveniently, the first transverse grooves may have a substantially straight course.

Advantageously, the second transverse grooves may have a substantially straight course. Preferably, the first circumferential groove has a width smaller than 5 mm.

Advantageously, the first, the second and the third circumferential groove may have an increasing width moving away from the outer shoulder region.

Conveniently, the first transverse grooves may have a maximum depth greater than the maximum depth of the second transverse grooves.

Further features and advantages of the invention shall become clearer from the detailed description of some preferred, although not exclusive, embodiments of a high or ultra high performance car tyre intended for use also on track, according to the present invention.

### Brief description of the drawings

Such description shall be made hereafter with reference to the accompanying drawings, provided only for indicating, and thus non-limiting, purposes, wherein:
- figure 1 shows a view of an example of a tyre according to the invention;
- figure 2 is an enlarged view of a cross-section of the tyre of figure 1;
- figure 3 is a schematic plan view of a portion of the tread band of the tyre of figure 1;
- figure 4 is a diagram showing how the tyre stiffness varies moving in axial direction from the outer shoulder to the inner shoulder; and
- figures 5 and 6 are diagrams showing the results of indoor noise tests of the tyre according to the invention as compared to two different comparison tyres.

### Detailed description of embodiments of the invention

With reference to the attached figures, a tyre for car wheels, and in particular for wheels of high or ultra high performance cars, also intended for use on track, is generally indicated at 1.

The structure of the tyre 1 is in itself of a conventional type and comprises a carcass, a tread band 8 placed in crown to the carcass, a pair of axially opposed sidewalls, ending in beads reinforced by bead cores and associated bead fillers. The tyre preferably also comprises a belt structure interposed between the carcass and the tread band. The carcass comprises one or more carcass plies anchored to the bead cores, while the belt structure comprises two belt strips radially superimposed to each other. The belt strips are formed of pieces of a rubberized fabric incorporating metal cords parallel to one another in each strip and having a crossed orientation, preferably with a symmetrical inclination relative to the equatorial plane, relative to the cords of adjacent strips. Preferably, the belt structure also comprises, in a radially outermost position, a third belt strip provided with cords oriented substantially parallel to the equatorial plane. Preferably, although not necessarily, the tyre according to the invention has a nominal section width of at least about 225, more preferably of at least about 245. For example, the tyre may have a nominal section width of 225, 245, 275, 295. Preferably, the tyre according to the invention has a reduced section height. For example, the section height may be smaller than or equal to 60%, more preferably smaller than or equal to 50%, of the nominal section width.

The tyre 1 preferably has an H/C ratio between the height of the straight section and the maximum section width comprised between 0.25 and 0.60.

The tread band 8 has overall a low void-to-rubber ratio, i.e. smaller than 0.25, preferably smaller than 0.20.

Preferably, the overall void-to-rubber ratio of the tread 1 is greater than 0.15.

Preferably, although not necessarily, the tyre according to the invention is of the asymmetrical type, in other words the pattern of the tread band 7 of the tyre on the right of the equatorial plane X-X is substantially different from that on the left. The tyre 1 and/or the tread band 8 therefore has an inner side to be preferably arranged, when fitted, towards the inside of the vehicle (on the right in the example shown in the figures) and an outer side to be preferably arranged towards the outside of the vehicle (on the left in the example shown in the figures).

The tread band 8 is provided with three circumferential grooves, respectively a first 2, a second 3, and a third 4 circumferential groove, extending in a substantially circumferential direction.

The first and second circumferential grooves 2 and 3 separate a central region L1 of the tread band 8 from an outer shoulder region L2 and an inner shoulder region L3 of the tread band 8, arranged to the left and right of the central region L1 respectively. The outer shoulder region L2 is located on the outer side of the tyre, whereas the inner shoulder region L3 is located on the inner side of the tyre.

The central L1 region extends through the equatorial X-X plane of the tyre. The outer L2 and inner L3 shoulder regions extend close to the axial ends of the tread band 8.

Although not represented by clearly recognizable edges, the ends of the tread 8 may be defined by the intersection between extensions, in a substantially axial direction, of the radially outermost portion of the tread band 8 and extensions, in a substantially radial direction, of the axially outermost portions of the tread band 8.

The L1 central region in this tyre takes up a limited portion of the tread band 8.

The central region L1 may, in fact, have a width smaller than or equal to 35% of the effective width of tread band 8, i.e. the width of the region of tread band 1 intended to contact the ground.

The central region L1 of the tread band 8 has preferably a width smaller than the width of the outer shoulder region L2.

Preferably, the central region L1 of the tread band 8 has a width greater than or equal to the width of the inner shoulder region L3.

The outer shoulder region L2 has a width greater than 30% of the effective width of tread band 8. The inner shoulder region L3 has a width smaller than 35% of the effective width of tread band 8. The outer shoulder region L2 has a width greater than the width of the inner shoulder region L3.

The first circumferential groove 2 delimits in axial direction the first outer shoulder region L2 relative to the central region L1 of the tread band 8, whereas the second circumferential groove 3 delimits in axial direction the second inner shoulder region L3 relative to the central region L1.

Preferably, the first 2 and the second 3 circumferential groove have a substantially straight course in the circumferential direction, preferably along the whole circumferential development of the tyre.

The first circumferential groove 2 has a different width as compared to the second circumferential groove 3.

In particular, the first circumferential groove 2 has a width that is significantly smaller than the width of the second circumferential groove 3. Preferably, the first circumferential groove 2 has a width smaller than 50% of the width of the second circumferential groove 3.

The first circumferential groove 2 is not particularly wide because it is mainly provided to give behavioral continuity between the outer shoulder region L2 and the central region L1, thus leaving mainly to the transverse grooves, which are described in more detail below, the function of draining water from the outer portion of the footprint area. The first circumferential groove 2 may, in fact, have a width smaller than or equal to about 5 mm, more preferably smaller than or equal to about 4 mm, in any case greater than or equal to about 2 mm.

Preferably, the second circumferential groove 3 may have a width greater than or equal to, about 6 mm, more preferably greater than or equal to about 8 mm, in any case smaller than or equal to about 15 mm.

Preferably, the first and second circumferential grooves 2 and 3 may have a depth smaller than or equal to about 8 mm, more preferably smaller than or equal to about 6 mm, in any case greater than or equal to about 2 mm. Preferably, the first circumferential groove 2 has a depth smaller than the depth of the second circumferential groove 3.

Tread band 8 further comprises a third circumferential groove 4 in the central region L1. The third circumferential groove 4 has a greater width as compared to the first circumferential groove 2. The third circumferential groove 4 has a smaller width as compared to the width of the second circumferential groove 3.

Preferably, the third circumferential groove 4 may have a width greater than or equal to about 5 mm, more preferably greater than or equal to about 6 mm, in any case smaller than or equal to about 12 mm.

The third circumferential groove 4 may have a depth smaller than or equal to about 8 mm, more preferably smaller than or equal to about 6 mm, in any case greater than or equal to about 4 mm. Preferably, the first circumferential groove 2 has a depth smaller than the depth of the third circumferential groove 4. Preferably, the second circumferential groove 3 has a depth substantially equal to the depth of the third circumferential groove 4.

Still referring to the embodiment shown in the figures, the second and the third circumferential groove 3 and 4 are configured so as to have a straight section with a substantially trapezoidal shape.

The third circumferential groove 4 also has straight course.

The first, the second and the third circumferential groove may have an increasing width moving away from the outer shoulder region L2.

As mentioned above, the first and the second circumferential groove 2 and 3 define in the tread band 8 the outer shoulder region L2 and the inner shoulder region L3, respectively located to the left and right of the central region L1.

The outer shoulder region L2, as well as the inner shoulder region L3, have a good stiffness, in order to lend to the tyre readiness of response, particularly at high speeds and when cornering.

In order to make the shoulder regions of the tyre stiff, the outer shoulder region L2 and the inner shoulder region L3 have a limited void-to-rubber ratio.

Preferably, the outer shoulder region L2 and/or the inner shoulder region L3 have a void-to-rubber ratio smaller than about 0.25, preferably smaller than about 0.23. Preferably, the outer shoulder region L2 and/or the inner shoulder region L3 have a void-to-rubber ratio greater than about 0.05, preferably greater than about 0.07.

The void-to-rubber ratio in the outer L2 and inner L3 shoulder regions is mainly determined by first transverse grooves 6, 7, respectively.

In other words, in the outer L2 and inner L3 shoulder regions preferably there are no other kinds of grooves and/or recesses (leaving out the first and the second circumferential groove 2, 3).

The outer shoulder region L2, and, respectively, the inner shoulder region L3, thus comprises first transverse grooves 6, 7 respectively, which are repeated circumferentially.

The first transverse grooves 6, and/or 7 respectively, have a straight course.

The first transverse grooves 6, and/or 7 respectively, have a substantially transverse course or a course which is slightly inclined relative to the axial direction.

In particular, the course of the first grooves 6, 7 respectively, forms an angle ω with the equatorial plane X-X of between 60° and 90°, preferably between 70° and 90°, in absolute value. The first transverse grooves 6, 7 have a maximum width greater than or equal to about 4 mm. Preferably, the first transverse grooves 6, 7 have a maximum width smaller than about 10 mm. For example, they may have a maximum width of between about 4 and about 8 mm.

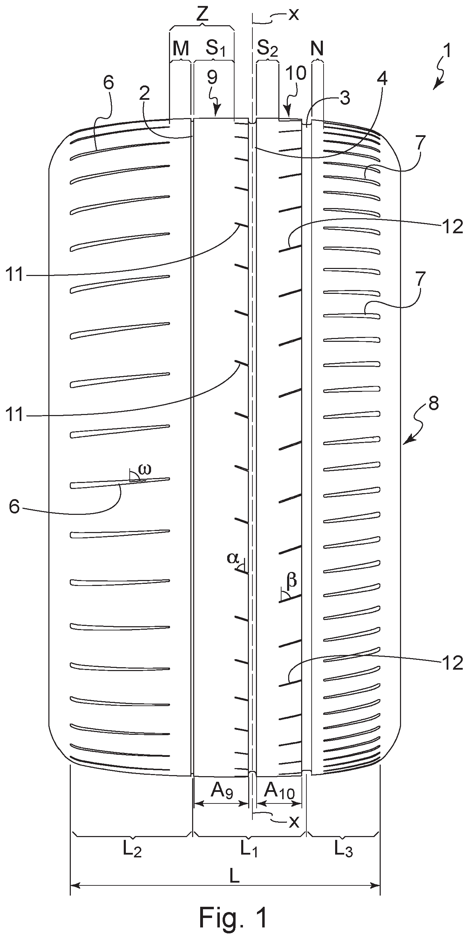

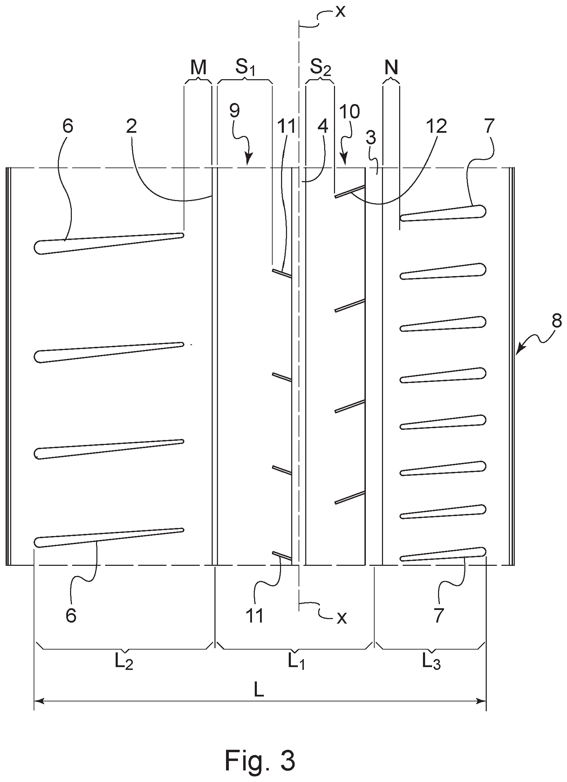

The first transverse grooves 6 and/or 7 may have, as in the example shown in figures 1,3, a decreasing width moving towards the equatorial plane X-X.

The first transverse grooves 6, and/or 7 respectively, may for example have the shape of an elongated drop.

Each first transverse groove 6, and/or 7 respectively, may have depth which is not constant along their respective extension, for example a depth which decreases, preferably gradually, moving towards the axially outer edges of the tyre.

Each first transverse groove 6, 7 respectively, has a maximum depth of at least about 1.5 mm and smaller than about 4 mm. Preferably, each first transverse groove 6, respectively 7, has a maximum depth of between about 2 mm and about 3.5 mm.

The number of the first transverse grooves 6 of the outer shoulder region L2 is lower than the number of the first transverse grooves 7 of the inner shoulder region L3. With reference to the embodiment shown in figures 1, 3, the number of the first transverse grooves 7 of the inner shoulder region L3 is about twice the number of the first transverse grooves 6 of the outer shoulder region L2.

As to the proportion between the number of grooves 7 located in the inner shoulder region L3 and the number of grooves 6 located in the outer shoulder region L2, a reasonable deviation from the value of exactly two may of course be envisaged: for example, considering seventy grooves arranged in the inner shoulder region L3, it may be envisaged to provide thirty to forty grooves in the outer shoulder region L2.

The first transverse grooves 6, and/or 7 respectively, have a first end located substantially at the respective axially outer edge of the tread band 8, and extend from said end in a substantially axial direction for at least 50% of the width of the outer and, respectively, inner shoulder regions L2, L3 where are located. In this way, the first transverse grooves 6, 7 respectively, affect the stiffness of the tread band regions in which they are formed.

In the embodiment shown in the figures, the first transverse grooves 6 of the outer shoulder region L2 have a smaller extension as compared to the first transverse grooves 7 of the inner shoulder region L3.

The first transverse grooves 6 of the outer shoulder region L2 may have an extension equal to at least 60% of the width of the outer shoulder region L2. Preferably, the first transverse grooves 6 of the outer shoulder region L2 may have an extension equal to at least 70% of the width of the outer shoulder region L2, in any case smaller than 90% of the width of the first outer shoulder region L2.

Therefore, the first transverse grooves 6 of the outer shoulder region L2 do not intersection points with the first circumferential groove 2.

The significant, but nevertheless limited, extension of the first transverse grooves 6 results in an annular shoulder portion M in circumferential direction in the outer shoulder region L2 having a void-to-rubber ratio substantially equal to zero.

The annular shoulder portion M is therefore a portion of the outer shoulder region L2 that is essentially free of grooves.

Preferably, the annular shoulder portion M is located adjacent to the circumferential groove 2.

The annular shoulder portion M has a width greater than or equal to 5% of an effective width L of the tread band 8.

Preferably, the annular shoulder portion M has a width smaller than or equal to 8% of an effective width L of the tread band 8.

Therefore, the first transverse grooves 7 of the inner shoulder region L3 do not have intersection points with the second circumferential groove 3.

In the embodiment shown in the figures, the first transverse grooves 7 of the inner shoulder region L3 may have an extension equal to at least 70% of the width of the inner shoulder region L3.

Preferably, the first transverse grooves 7 of the inner shoulder region L3 may have an extension equal to at least 80% of the width of the inner shoulder region L3, in any case smaller than 90% of the width of the inner shoulder region L3.

The significant, but nevertheless limited, extension of the first transverse grooves 7 results in an annular shoulder portion N in the circumferential direction in the inner shoulder region L3 having a void-to-rubber ratio substantially equal to zero.

Preferably, the annular shoulder portion N has a void-to-rubber ratio smaller than or equal to 0.02 and is located adjacent to the circumferential groove 3.

Therefore, the annular shoulder portion N is a portion of the inner shoulder region L3 that is substantially free of grooves.

Preferably, the annular shoulder portion N has a width smaller than or equal to 7% of an effective width L of the tread band 8.

The annular shoulder portion N has a width greater than or equal to 4% of an effective width L of the tread band 8.

The central region L1 is designed to ensure a high amount of rubber in contact with the ground together with proper drainage at the most central portion, i.e. near the equatorial X-X plane of tyre 1.

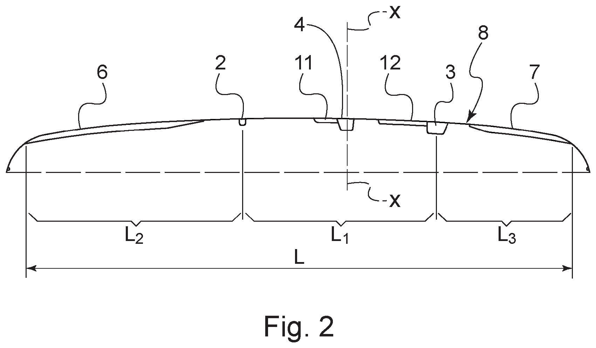

For this purpose, the tread band 8 shown in Figs. 1-3 has a void-to-rubber ratio smaller than about 0.3, preferably smaller than about 0.25, in the central region L1.

The third circumferential groove 4 defines, together with the first 2 and the second 3 circumferential groove, a first 9 and a second 10 circumferential rib in the central region L1.

In the tyre shown in figures 1-3 the first circumferential rib 9 is located between the first circumferential groove 2 and the third circumferential groove 4. The second circumferential rib 10 is located between the third circumferential groove 4 and the second circumferential groove 3.

In the tyre shown in figures 1-3, in order to increase the amount of "rubber to the ground" at the central region L1, and consequently optimize handling, noise and rolling resistance features, the central region L1 and the circumferential ribs 9, 10 are characterized by low void-to-rubber ratios.

At least one of the first 9 and the second 10 circumferential rib, preferably both, has, in fact, a void-to-rubber ratio smaller than about 0.02, more preferably smaller than about 0.015.

For this purpose, the first 9 and the second 10 circumferential rib comprise a plurality of second transverse grooves 11, 12.

The void-to-rubber ratio of the first 9 and the second 10 circumferential rib is determined exclusively by the second transverse grooves 11, 12.

In the tyre shown in figures 1-3, the second transverse grooves 11 are located in the first rib 9, while the second transverse grooves 12 are located in the second circumferential rib 10.

The second transverse grooves 11, 12 are preferably thin notches and have a maximum width smaller than or equal to about 2 mm.

Preferably, the second transverse grooves 11, 12 have a maximum depth smaller than 3 mm, preferably smaller than 2.5 mm. Preferably, the second transverse grooves 11, 12 have a maximum depth greater than 1 mm.

Preferably, the first transverse grooves 6, 7 may have a maximum depth greater than the maximum depth of the second transverse grooves 11, 12.

The second transverse grooves 11 and/or 12 may have a straight course, substantially along the whole extension thereof.

The second transverse grooves 11 and/or 12 are mutually spaced apart in the circumferential direction by a distance preferably comprised in the range of between 25 mm and 80 mm.

The second transverse grooves 11 are inclined so as to form an angle α with the equatorial plane X-X.

In detail, the course of the second transverse grooves 11 forms an angle α with the equatorial plane X-X comprised between 45° and 90°, preferably between 50° and 70°, in absolute value.

The second transverse grooves 12 are inclined so as to form an angle β with the equatorial plane X-X.

In detail, the course of the second transverse grooves 12 forms an angle β with the equatorial plane X-X comprised between 45° and 90°, preferably between 50° and 70° in absolute value.

The second transverse grooves 11 of the first circumferential rib 9 are counter-inclined relative to the second transverse grooves 12 of the second circumferential rib 10.

The second transverse grooves 12 of the second circumferential rib 10 have a greater extension as compared to the extension of the second transverse grooves 11 of the first circumferential rib 9.

Preferably, the second grooves 11 extend over at least 30%, preferably 40%, of the width of the circumferential rib 9 in which they are located. Preferably, the second grooves 12 also extend over at least 30%, preferably 40%, of the width of the circumferential rib 10 in which they are located.

In order to increase driving precision and grip, the first and the second circumferential rib are respectively provided with a first S1 and a second S2 circumferential annular portion having a void-to-rubber ratio substantially equal to zero.

The presence of central ribs provided with a first and a second circumferential annular portion having a substantially zero void-to-rubber ratio, in synergy with the annular portion M of the outer shoulder region L2 and preferably also with the annular portion N of the inner shoulder region L3, also having a substantially zero void-to-rubber ratio, increases the rigidity of the tyre, to the advantage of grip, particularly on track, trajectory precision and noise reduction.

The first annular portion S1 of the first circumferential rib 9 is adjacent to the first circumferential groove 2.

Preferably, the first annular portion S1 of the first circumferential rib 9 is arranged so as to form with the annular shoulder portion M an annular portion Z extending over at least about 10% of an effective width of the tread band 8 and having a substantially zero void-to-rubber ratio, leaving out the contribution of the first circumferential groove 2.

The first annular portion S1 has a width greater than or equal to 6% of the effective width L of the tread band 8.

The first annular portion S1 has a width smaller than or equal to 10% of the effective width L of the tread band 8.

Preferably, the first annular portion S1 has a width greater than or equal to 30% of the width A9 of the first circumferential rib 9.

The first annular portion S1 has a width greater than the width of the second annular portion S2, whereas the second annular portion S2 has a width greater than the width of the annular shoulder portion M.

The second annular portion S2 of the second circumferential rib 10 is adjacent to the third circumferential groove 4.

Preferably, the second annular portion S2 has a width greater than or equal to 25% of the width A10 of the second circumferential rib 10.

The second annular portion S2 has a width smaller than or equal to 9% of the effective width L of the tread band 8 and greater than or equal to 6% of the effective width L of the tread band 8.

Simulations were carried out with respect to the stiffness of the tread band of the tyre according to the invention, in order to measure its variation in the axial direction. The tread bands of two comparison tyres currently manufactured by the Applicant for the same market segment were also subjected to the same kind of test.

To this end, the tread band of the tyres was divided into five mutually adjacent circumferential rings of equal width.

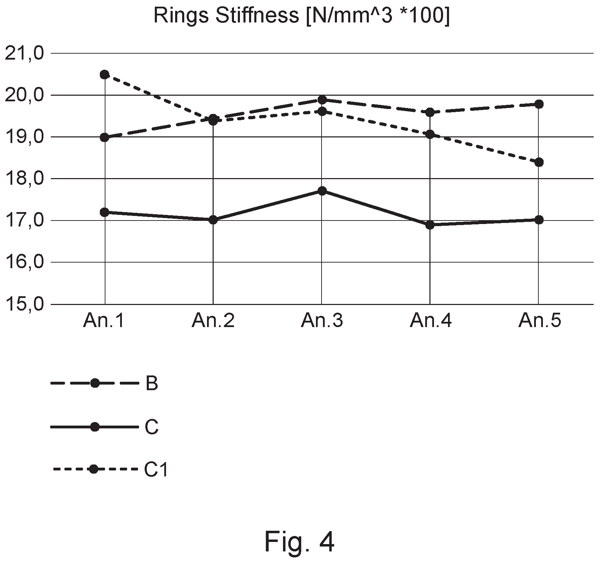

The simulation results are shown in figure 4. Diagrams C and C1 refer to the comparison tyres, whereas diagram B refers to the tyre according to the invention.

As it can be seen, the tyre according to the invention has a significantly higher stiffness in almost all circumferential rings and, moreover, the circumferential rings as a whole do not show any significant variation in stiffness.

Indoor noise tests were also carried out.

The noise tests were carried out in an externally soundproof chamber (semi-anechoic chamber) using a fixed turret rotatably supporting the tyre to be tested, equipped first with a tyre according to the present invention and then with two different comparison tyres of the same market segment.

In the noise test, one tyre for each set is kept in contact with a rotating drum and is made to rotate at different speeds. In addition, microphones are placed inside and outside the car for measuring internal and external noise respectively.

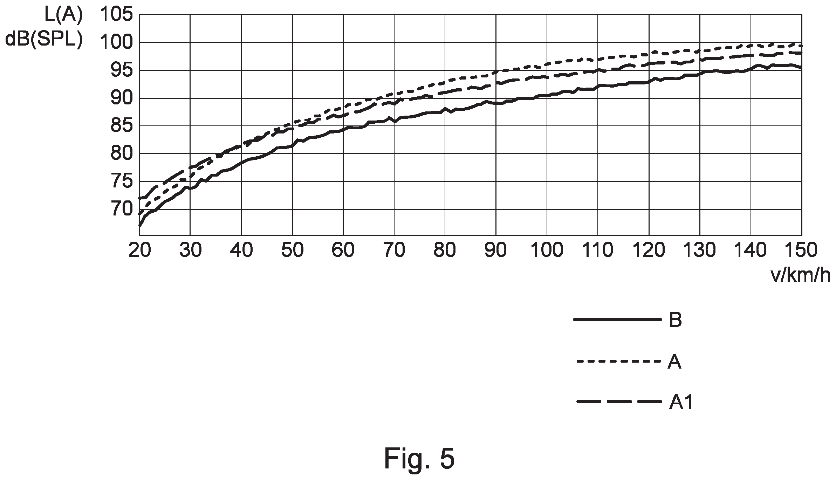

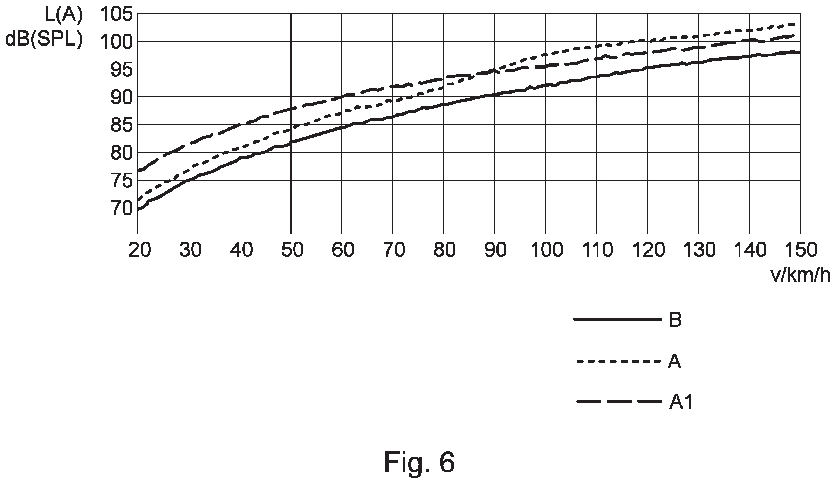

Figures 5 and 6 show the diagrams relating to the noise level in dB (A) outside (Fig. 5) and inside (Fig. 6) the car as a function of speed (km / h) between 150 and 20 km / h. Diagrams A and A1 refer to the comparison tyres, whereas diagrams B refer to the tyre according to the invention. It can be noted that the tyre according to the invention has a noise level (both measured outside and inside the vehicle) lower than the lowest noise level among those compared by an average of 5 dB (A). The test results show that the tyre according to the invention has thus a significantly better behavior as compared to the comparison tyres in the indoor noise tests carried out.

Various modifications may be made to the embodiments herein described in detail, while still remaining within the scope of protection of the invention, as defined by the following claims.

## Claims

1. Car tyre (1) having a tread band (8) comprising a central region (L1) extending across an equatorial plane (X-X) of the tyre, an outer shoulder region (L2) located towards an outer side of the tyre and an inner shoulder region (L3) located towards an inner side of the tyre;
a first circumferential groove (2) axially delimiting the outer shoulder region (L2) relative to the central region (L1) and a second circumferential groove (3) axially delimiting the inner shoulder region (L3) relative to the central region (L1);
said central region (L1) having a width smaller than or equal to 35% of an effective width (L) of said tread band (8);
said outer shoulder region (L2) and said inner shoulder region (L3) having a width greater than or equal to 30% of an effective width (L) of said tread band (8);
said outer shoulder region (L2) having a width greater than the width of the inner shoulder region (L3);
said outer shoulder region (L2) and said inner shoulder region (L3) comprising a plurality of first transverse grooves (6, 7) having a first end located substantially at the respective edge of the tread band (8), a maximum width greater than or equal to 4 mm and an extension equal to at least 50% of the width of the shoulder region in which they are located;
said central region (L1) comprising a first and a second circumferential rib (9, 10) separated from each other by a third circumferential groove (4), said first and second circumferential ribs (9, 10) comprising a plurality of second transverse grooves (11, 12); wherein
said outer shoulder region (L2) comprises a shoulder annular portion (M) having a void-to-rubber ratio substantially equal to zero, located adjacent to said first circumferential groove (2);
said first circumferential rib (9) has a first annular portion (S1) having a void-to-rubber ratio substantially equal to zero, located adjacent to said first circumferential groove (2);
said second circumferential rib (10) has a second annular portion (S2) having a void-to-rubber ratio substantially equal to zero;
said first or said second circumferential rib (9, 10) has a void-to-rubber ratio smaller than 0.02.

2. Tyre (1) according to claim 1, **characterized in that** said second annular portion (S2) is located adjacent to said third circumferential groove (4).

3. Tyre (1) according to claim 1 or 2, **characterized in that** said first circumferential rib (9) has a void-to-rubber ratio smaller than 0.01.

4. Tyre (1) according to any one of claims 1 to 3, **characterized in that** said first annular portion (S1) has a width greater than or equal to 30% of a width (A9) of said first circumferential rib (9).

5. Tyre (1) according to any one of claims 1 to 4, **characterized in that** said second annular portion (S2) has a width greater than or equal to 25% of a width (A10) of said second circumferential rib (10).

6. Tyre (1) according to any one of claims 1 to 5, **characterized in that** said first annular portion (S1) has a width greater than the width of said second annular portion (S2).

7. Tyre (1) according to any one of claims 1 to 6, **characterized in that** said first annular portion (S1) has a width greater than the width of said shoulder annular portion (M).

8. Tyre (1) according to any one of claims 1 to 7, **characterized in that** said second transverse grooves (11, 12) have a maximum width smaller than 2 mm.

9. Tyre (1) according to any one of claims 1 to 8, **characterized in that** said second transverse grooves (11, 12) have a maximum depth smaller than 4 mm.

10. Tyre (1) according to any one of claims 1 to 9, **characterized in that** the number of said first transverse grooves (6) of the outer shoulder region (L2) is lower than the number of said first transverse grooves (7) of the inner shoulder region (L3).

11. Tyre (1) according to any one of claims 1 to 10, **characterized in that** said first transverse grooves (6) of said outer shoulder region (L2) have a maximum width greater than the maximum width of said first grooves (7) of said inner shoulder region (L3).

12. Tyre (1) according to any one of claims 1 to 11, **characterized in that** said first transverse grooves (6, 7) have a maximum depth smaller than 4 mm.

13. Tyre (1) according to any one of claims 1 to 12, **characterized in that** said first transverse grooves (6, 7) have a substantially straight course.

14. Tyre (1) according to any one of claims 1 to 13, **characterized in that** said first transverse grooves (6, 7) have a maximum depth greater than the maximum depth of said second transverse grooves (11, 12).
